# EUROPEAN PATENT APPLICATION

(11) **EP 1 793 146 A1**
(43) Date of publication of application: **06.06.2007**
(21) Application number: 05768487.0
(22) Date of filing: 03.08.2005
(51) Int. Cl.: F16J 15/32

(54) **SEALING DEVICE**

(30) Priority: 24.09.2004 JP 2004276258; 02.02.2005 JP 2005026456; 01.07.2005 JP 2005193488
(71) Applicant: NOK Corporation, Minato-ku Tokyo 105-8585 (JP)
(72) Inventor: SATO, Hiroyuki, c/o NOK CORPORATION, Fukushima-shi, Fukushima 9601102 (JP); WATANABE, Masaru, c/o NOK CORPORATION, Fukushima-shi, Fukushima 9601102 (JP); MIZUNOYA, Koichi, c/o NOK CORPORATION, Fukushima-shi, Fukushima 9601102 (JP); OTANI, Takeo, c/o NOK CORPORATION, Fukushima-shi, Fukushima 9601102 (JP); ARAI, Hidenori, c/o NOK CORPORATION, Fukushima-shi, Fukushima 9601102 (JP); ITO, Sosuke, c/o NOK CORPORATION, Fukushima-shi, Fukushima 9601102 (JP); OKUBO, Ryota, c/o NOK CORPORATION, Fukushima-shi, Fukushima 9601102 (JP)
(74) Representative: TBK-Patent
(86) International application number: PCT/JP2005/014170
(87) International publication number: WO 2006/033202

(57) **Abstract**

In a sealing device (1), in which a main seal lip (6) used for a shock absorber is formed in a one-stage seal lip structure, for the purpose to improve friction characteristics while securing sealing performance, a roughened portion (63) to which satin finishing is applied to form projections and recessions on the surface thereof is formed on the sliding surface (61) of the main seal lip (6) slidably moving on a contacting member at a position apart a specified distance from a lip edge (62). An area between the lip edge (62) and the portion where the roughened portion (63) is formed is a plane portion (64) to which the satin finishing for forming irregularities is not applied. In place of the satin finishing, a plurality of axially extending projections (65), concave threads (67), or lattice-shaped projections (68) may be formed on the roughened portion.

## Description

### BACKGROUND OF THE INVENTION

### Field of the Invention

The present invention relates to a sealing device, and more particularly, to a sealing device in which a main lip used for a shock absorber is formed in a one-stage seal lip structure.

### Description of the Conventional Art

In recent years, as for an oil seal which is a kind of a sealing device used for a shock absorber, it has been required to improve friction characteristics (reducing of friction) in addition to improving of sealing performance. An oil seal including a main seal lip formed in a two-stage lip structure and a dust seal lip is generally used for the shock absorber. Japanese Patent Application Laid Open No. 2001-355740 discloses a technique of this case, in which friction characteristics is improved by providing a satin finishing shape, a screwing processing shape, or a shape of parallel projections at a second seal lip of the main seal lip. In this disclosure, the friction characteristics are improved by forming recessed and projected portions on a sliding surface of the second seal lip so as to form a space in which an oil film is interposed. However, when this technique is applied to a main seal lip formed in a one-stage seal lip structure, sealing performance may be decreased, so that it is hardly applied as it is.

However, the main seal lip formed in a one-stage seal lip structure has the following merits compared with the main seal lip formed in a two-stage seal lip structure. Friction can be reduced due to having a small contacting width, a space can be reduced due to having a small seal lip cross section, and abrasion resistance can be increased. Therefore, improving of the friction characteristics has been required also in the main seal lip formed in a one-stage seal lip structure.

Further, Japanese Patent Application Laid Open No. 2004-138091 discloses a technique for providing a projection in the axial direction at a roughed portion . However, in this disclosure, the projection is provided only in the case that the main seal lip is formed in a two-stage seal lip structure. So, the disclosure does not disclose a technique for providing the projection in the case that the main seal lip is formed in a one-stage seal lip structure.

### Summary of the Invention

### Problems to be solved

The present invention solves the above-described problems, and an objective of the present invention is to provide a sealing device in which a main seal lip used for a shock absorber is formed in a one-stage structure. In this sealing device, friction characteristics are improved while securing sealing performance.

### Means for Solving Problem

In order to realize the above-described object, according to a first aspect of the present invention, in a sealing device in which a main seal lip used for a shock absorber is formed in a one-stage structure, a roughed portion is formed on a sliding surface of the main lip at a position apart a specified distance from a lip edge.

Further, according to a second aspect of the present invention, in the sealing device according to the first aspect, a plurality of axially extending projections is formed on the sliding surface of the main seal lip at a position apart a specified distance from the lip edge, so as to form the roughed portion on the sliding surface.

Further, according to a third aspect of the present invention, in the sealing device according to the first aspect, a plurality of axially extending concave threads is formed on the sliding surface of the main seal lip at a position apart a specified distance from the lip edge, so as to form the roughed portion on the sliding surface.

Further, according to a fourth aspect of the present invention, in the sealing device according to the first aspect, a plurality of axially extending lattice-shaped projections is formed on the sliding surface of the main seal lip at a position apart a specified distance from the lip edge, so as to form the roughed portion on the sliding surface.

### Effectiveness of the Invention

The present invention has the following effects.

As for the sealing device according to the first aspect having the above-described constitution, since the roughed portion is formed on the sliding surface of the main seal lip, so as to interpose an oil film on the sliding surface by the projection and recession of the roughed portion, the friction characteristic can be improved. Further, since the roughed portion is not formed within an area of the specified distance from the lip edge of the sliding surface, a plane portion is formed between the lip edge and a portion where the roughed portion is formed. Thus, a sealed object can be sealed by the plane portion, so as to secure the sealing performance. That is, a sealing device in which the main lip is formed in a one-stage seal lip structure, wherein the friction characteristics can be improved while securing the sealing performance, can be provided. Further, since the main seal lip is formed in a one-stage seal lip structure, the sealing device can maintain the aforesaid effects that friction can be reduced due to having a small contacting width, a space can be reduced due to having a small seal lip cross section, and abrasion resistance can be increased, and these effects are more advantageous than the conventional device having the two-stage seal lip structure.

Further, as for the sealing devices according to the second to fourth aspects, the following effect can be obtained in addition to the effect of the first aspect, since a plurality of axially extending projections, concave threads, or lattice-shaped projections is formed as the roughed portion, the processed surface is uniform better than the roughing-processed surface, so that the amount of the oil film interposed on the sliding surface can be fixed so as to make the friction characteristics stable.

Further, since a mold for mold-vulcanizing a plurality of the axially extending projections, concave threads, or lattice-shaped projections can be machined by a lathe or the like, exact roughing can be secured, and uniform arrangement of the projections can be set. Thereby, the friction characteristics can be controlled with high degree of freedom.

Furthermore, the sealing device according to the third aspect, can obtain the following effect in addition to the above-described effect. Since rising of a top end portion of the main seal lip can be controlled, when the seal lip is entirely contacted due to the pressure to be applied, a contacting width of the plane portion can be made stable, so as to secure the sealing performance.

### BRIEF EXPLANATION OF DRAWINGS

Fig. 1 is a cross-sectional view of a part of a sealing device according to a first embodiment of the present invention.
Fig. 2 is a comparison graph of frictional force between a first embodiment of the present invention and comparison examples.
Fig. 3 is a comparison graph of the leaking amount between a first embodiment of the present invention and comparison examples.
Fig. 4 is a cross-sectional view of a part of a sealing device according to a second embodiment of the present invention.
Fig. 5 is a view for explaining shapes of projections of Fig. 4.
Fig. 6 is a comparison graph of frictional force between a second embodiment of the present invention and comparison examples.
Fig. 7 is a comparison graph of the leaking amount between a second embodiment of the present invention and comparison examples.
Fig. 8 is a cross-sectional view of a part of a sealing device according to a third embodiment of the present invention.
Fig. 9 is a cross-sectional view of a part of a sealing device according to a fourth embodiment of the present invention.

### Explanation of Reference Numerals

1: Sealing device
2: Metal ring
3: Seal main body
4: Fixed tight contacting portion
5: Seal portion
6: Main seal lip
61: Sliding surface
62: Lip edge
63: Roughed portion
64: Plane portion
65: Projections
66: Top end portion
67: Concave threads
68: Lattice-shaped projections
7: Dust seal lip
71: First seal lip
72: Second seal lip

### DETAILED DESCRIPTION OF PREFERRED EMBODIMENT

Hereinafter, preferred embodiments of the present invention will be described with drawings. However, a range of the present invention is not limited to the contents described in the embodiments if there are no descriptions for limitation.

### First Embodiment

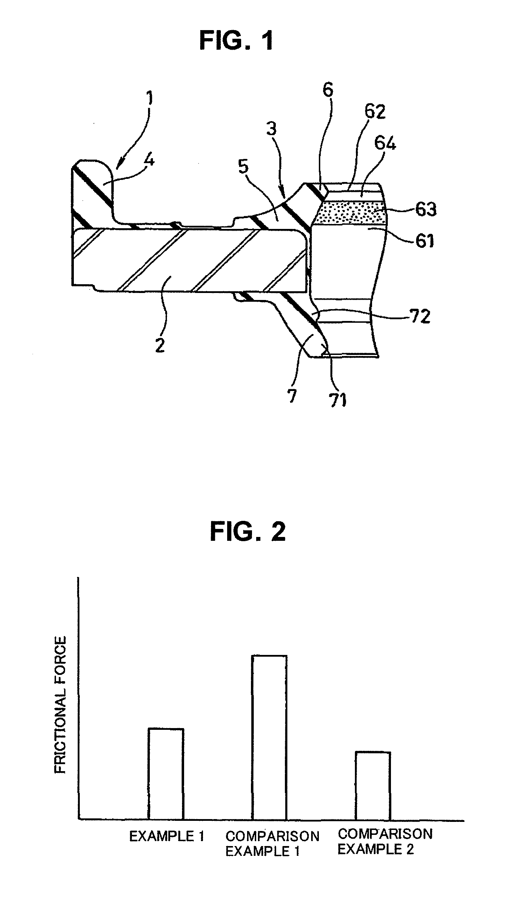

Fig. 1 is a cross-sectional view of a part of a sealing device 1 according to a first embodiment of the present invention, and has the following constitution.

The sealing device 1 includes a metal ring 2 having a cylindrical cross section, and a seal main body 3 including a rubber like elastic body vulcanizing-bonded to the metal ring 2. The seal main body 3 includes a fixed tight contacting portion 4, which is positioned at the side of the object to be sealed (the inner side) on the outer periphery side of the metal ring 2, and is tight contacted with a housing not illustrated in the drawings; and a seal portion 5, which is positioned on the inner periphery side of the metal ring 2 and is slid while being tight contacted with a shaft not illustrated in the drawings. The fixed tight contacting portion 4 and the seal portion 5 are vulcanizing-bonded to the metal ring 2 by integrally vulcanizing. The seal portion 5 includes a main seal lip 6, which is positioned at the inner side than the metal ring 2, is extended toward the inner side, has a function for mainly sealing internal fluid, i.e. oil, and is formed in a one-stage seal lip structure; and a dust seal lip 7, which is positioned at the outer side than the metal ring 2, is extended toward the outer side, and has a function for mainly sealing so as to prevent flow-in of external foreign matters. The dust seal lip 7 is formed in a two-stage seal lip structure including a first seal lip 71 and a second seal lip 72 which is at the inner side than the first seal lip 71.

A sliding surface 61 of the main seal lip 6 has a roughed portion 63 at a position apart a specified distance from a lip edge 62. The roughed portion 63 is subjectedto a satin finishing so as to form projected and recessed portions on the surface thereof. Therefore, a plane portion 64 not having the projected and recessed portions on the surface thereof is formed on specified distance area between the lip edge 62 and the roughed portion 63.

As for the roughing of the surface by the roughing finishing, the depths of the projection and recession are preferably 5 to 500 µm, and more preferably, 5 to 40 µm.

Further, the roughed portion 63 is preferably formed at a position apart 0.2 to 1 mm from the lip edge 62.

When the sealing device 1 of the first embodiment having the above-described constitution is mounted, the roughed portion 63 formed on the sliding surface 61 of the main seal lip 6 is slid with a shaft which is a contacting member. Thus, an oil film can be interposed on the sliding surface 61 so as to improve the friction characteristics.

Results of the first embodiment are shown in Fig. 2. Fig. 2 illustrates comparison data of frictional forces of Example 1 which is the first embodiment, a case of not forming the roughed portion on the sliding surface (Comparison example 1) , anda case of subjecting the whole sliding surface to the satin processing without forming the plane portion (Comparison example 2). From the results, it can be found out that frictional force in Example 1 was improved more than the case of not forming the roughed portion (Comparison example 1).

Further, the roughed portion 63 is not formed within a specified distance from the lip edge 62. So, by sliding the plane portion 64 formed within the specified distance with the shaft, the oil which is the object to be sealed can be sealed so as to secure the sealing performance.

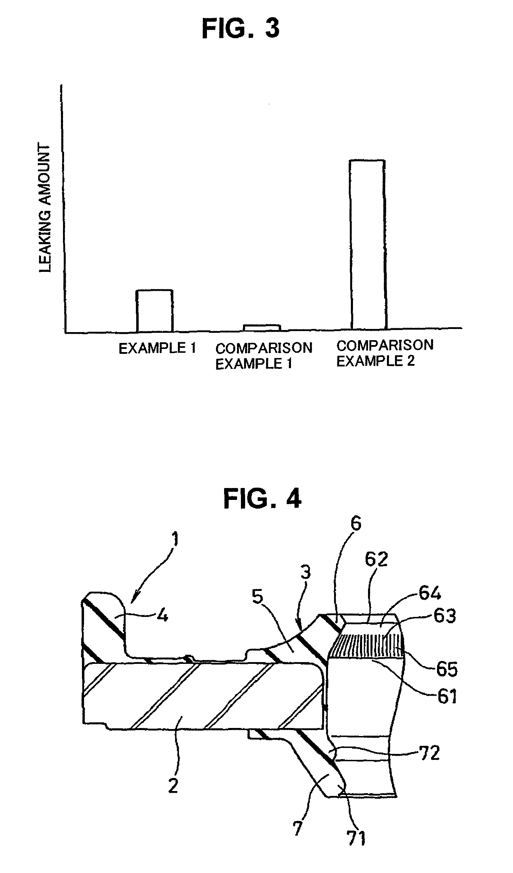

Results of the leaking amount in the experiment are shown in Fig. 3. Fig. 3 illustrates comparison data of the leaking amounts of Example 1 which is the first embodiment, the case of not forming the roughed portion on the sliding surface (Comparison example 1), and the case of subjecting the whole sliding surface to the satin processing without forming the plane portion (Comparison example 2), like Fig. 2. From the results, it can be found out that the leaking amount of Example 1 was remarkably reduced more than the case of subjecting the whole sliding surface to the satin processing without forming the plane portion (Comparison example 2), and an increase of leaking amount comparing with the case of not forming the roughed portion on the sliding surface (Comparison example 1) was small.

That is, in Example 1, the friction characteristics can be improved while securing the sealing performance. Thus, both can be compatible.

Further, the contacting width of the main seal lip positioned at the side of the object to be sealed (the inner side) is made about 0.5 to 1.0t with respect to the axial thickness t of the metal ring, so as to increase rigidity, so that pressure resistance can be improved. By reducing the friction of the main lip having such the shape and stabilizing the amount of the oil film when sliding, stabilization of the frictional force (the frictional force characteristics) can be improved.

In addition, since the projections and recessions formed on the roughed surface have the objective to form oil film, it can have any shape if the shapes are within the range of the objective, and for example, can have a satin finished shape, a screwing processed shape, or a shape of parallel projections.

### Second Embodiment

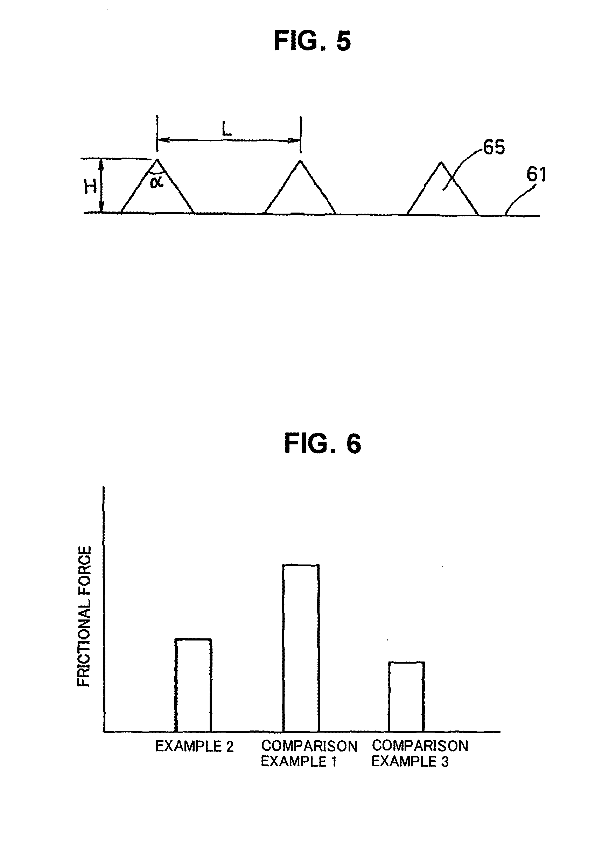

Fig. 4 is a cross-sectional view of a part of a sealing device 1 according to a second embodiment of the present invention. Fig. 5 illustrates a schematic cross section for explaining a shape of projections provided on the sliding surface of the main seal lip in Fig. 4. Different portions from that of the first embodiment will be described as follow.

In the second embodiment, a plurality of axially extending projections 65 is formed on the whole sliding surface 61 of the main seal lip 6 at equal intervals at a position apart a specified distance from the lip edge 62. That is, the projections 65 being axially parallel are formed at the rough part 63 formed on the sliding surface 61. Therefore, the plane portion 64 not having the projected and recessed portions on the surface thereof is formed within the specified distance between the lip edge 62 and the projections 65.

The projections 65 are preferably formed at a position apart 0.2 to 1 mm from the lip edge 62 and more preferably, are formed a position apart 0.3 to 0.7 mm from the lip edge 62. That is, the distance from the lip edge 62 where the plane portion 64 is formed is preferable 0.2 to 1 mm, and more preferably, is 0.3 to 0.7 mm.

Further, the cross sectional shape of the projections 65 is preferably triangle, and top point angle α of the projections when having triangle shape is preferably 60 to 120°. Further, as for a shape size of the projections, the height H is preferably 2 to 500 µm, and an interval between the projections (a distance between top points of the projections) L is preferably 0.005 to 1.0 mm. Furthermore, when elastic contact is considered, the height H is more preferably 5 to 100µm, the distance between the projections L is more preferably 0.01 to 0.2 mm.

When the sealing device 1 in the second embodiment having the above-described constitution is mounted, the projections 65 formed at the roughed portion 63 of the sliding surface 61 of the main seal lip 6 are slid with the shaft, so as to interpose the oil film on the sliding surface 61. Thereby, the friction characteristics can be improved. Especially, the projections 65 can be uniformly formed at the roughed portion 63. So, the amount of the oil film interposed on the sliding surface 61 can be fixedly uniform, so that the friction characteristics can be stabilized.

Further, the projections 65 are not formed at a position within a specified distance from the lip edge 62. So, by sliding the plane portion 64 formed between the lip edge 62 and the projections 65 with the shaft, the oil, the object to be sealed, can be sealed, so as to secure the sealing performance.

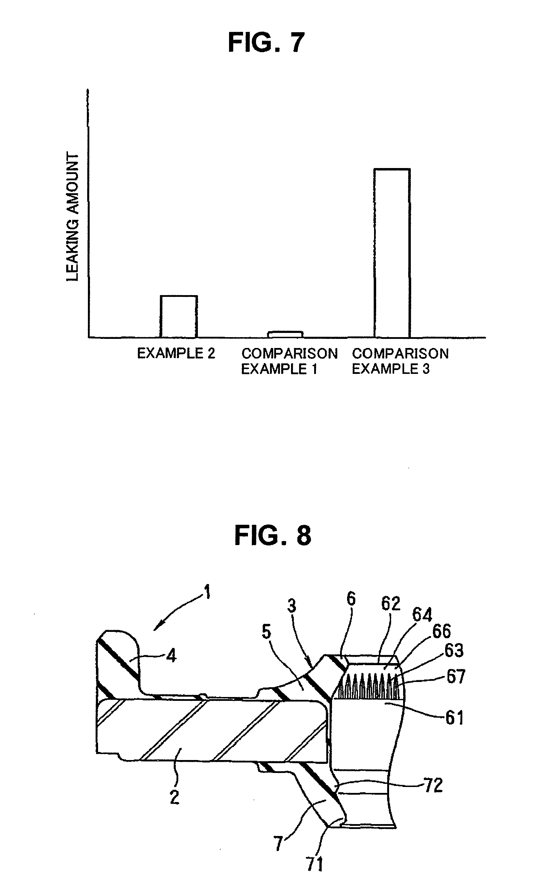

More particularly, results of the second embodiments were illustrated in Figs. 6 and 7. Figs. 6 and 7 illustrate comparison results of Example 2 in which the projection top end angle was 90°, the projection height H was 0.3 mm, and the projection interval was 0.15 mm; a case of not forming the roughed portion on the sliding surface (Comparison example 1); and a case of forming axial projections on the whole sliding surface (Comparison example 3). From the results, the results similar to those in Example 1 could be obtained. That is, the frictional force could be improved more than that of Comparison example 1 (the case of not forming the roughed portion), and the leaking amount could be remarkably improved more than that of Comparison example 3 (the case of forming the axially projections on the whole surface).

That is, in Example 2, the friction characteristics can be improved while securing the sealing performance. Thus, both can be compatible.

Further, a mold for mold-vulcanizing a plurality of the axially extending projections can be machined by a lathe or the like. Thus, exact roughing can be secured, and uniform arrangement of the projections can be set. Thereby, the friction characteristics can be controlled with high degree of freedom.

Further, the contacting width of the main seal lip positioned at the side of the object to be sealed (the inner side) is about 0.5 to 1.0t with respect to the axial thickness t of the metal ring, so as to increase rigidity, so that pressure resistance can be improved. By reducing the friction of the main lip having such the shape and stabilizing the amount of the oil film when sliding, stabilization of the frictional force (the frictional force characteristics) can be improved.

### Third Embodiment

Fig. 8 is a cross-sectional view of a part of a sealing device 1 according to a third embodiment of the present invention. Different portions from that of the first embodiment will be described as follow.

In the third embodiment, a plurality of axially extending concave threads 67 is formed on the whole sliding surface 61 of the main seal lip 6 with equal intervals at a position apart a specified distance from the lip edge 62. That is, the concave threads 67 being axially parallel are formed at the rough part 63 formed on the sliding surface 61. Therefore, the plane portion 64 not having the projected and recessed portions on the surface thereof is formed within the specified distance between the lip edge 62 and the concave threads 67.

When the sealing device 1 in the third embodiment having the above-described constitution is mounted, the concave threads 67 formed at the roughed portion 63 of the sliding surface 61 of the main seal lip 6 are slid with the shaft, so as to interpose the oil film on the sliding surface 61. Thereby, the friction characteristics can be improved. Especially, the concave threads 67 can be uniformly formed at the roughed portion 63. So, the amount of the oil film interposed on the sliding surface 61 can be fixedly uniform, so that the friction characteristics can be stabilized.

Further, the concave threads 67 are not formed at a position within a specified distance from the lip edge 62. So, by sliding the plane portion 64 formed between the lip edge 62 and the concave threads 67 with the shaft, the oil, the object to be sealed, can be sealed, so as to secure the sealing performance.

Further, when the seal lips (6, 7) are entirely contacted due to the pressure to be applied, rising of a top end portion 66 of the main seal lip 6 can be controlled. So, the contacting width of the plane portion 64 can be made stable so as to secure the sealing performance. Furthermore, a mold for mold-vulcanizing a plurality of the axially extending concave threads 67 can be machined by a lathe or the like. Thus, exact roughing can be secured, and uniform arrangement of the concave threads can be set . Thereby, the friction characteristics can be controlled with high degree of freedom.

### Fourth Embodiment

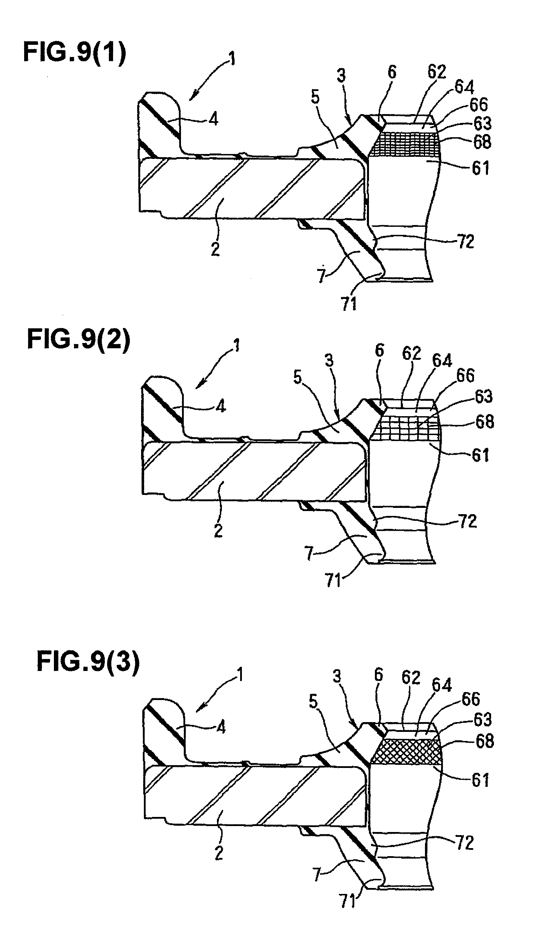

Fig. 9 is a cross-sectional view of a part of a sealing device 1 according to a forth embodiment of the present invention. Different portions from that of the first embodiment will be described as follow.

In the fourth embodiment, a plurality of axially extending lattice-shaped projections 68 is formed on the whole sliding surface 61 of the main seal lip 6 at equal intervals at a position apart a specified distance from the lip edge 62. That is, the lattice-shaped projections 68 are formed at the rough part 63 formed on the sliding surface 61. Therefore, the plane portion 64 not having the projected and recessed portions on the surface thereof is formed within the specified distance between the lip edge 62 and the lattice-shaped projections 68. In addition, the lattice-shaped projections 68 may have a lattice shape which lines cross in the axial direction and the orthogonal direction thereto as illustrated in Fig. 9 (1) and (2), and may have a lattice shape which has a specified angle with respect to the axial direction as illustrated in Fig. 9 (3) . Further, a size of the lattice for forming the lattice-shape projections are not especially limited as illustrated in Fig. 9 (1) and (2), and can be appropriately decided according to the amount of the oil film to be interposed on the sliding surface.

When the sealing device 1 in the fourth embodiment having the above-described constitution is mounted, the lattice-shaped projections 68 formed at the roughed portion 63 of the sliding surface 61 of the main seal lip 6 are slid with the shaft, so as to interpose the oil film on the sliding surface 61. Thereby, the friction characteristics can be improved. Especially, the lattice-shaped projections 68 can be uniformly formed at the roughed portion 63. So, the amount of the oil film interposed on the sliding surface 61 can be fixedly uniform, so that the friction characteristics can be stabilized.

Further, the lattice-shaped projections 68 are not formed at a position within a specified distance from the lip edge 62. So, by sliding the plane portion 64 formed between the lip edge 62 and the lattice-shaped projections 68 with the shaft, an oil, the object to be sealed, can be sealed, so as to secure the sealing performance.

Furthermore, a mold for mold-vulcanizing a plurality of the axially extending lattice-shape projections 68 can be machined by a lathe or the like. Thus, exact roughing can be secured, and uniform arrangement of the projections can be set. Thereby, the friction characteristics can be controlled with high degree of freedom.

## Claims

1. A sealing device (1) in which a main seal lip (6) used for a shock absorber is formed in a one-stage structure,
wherein a roughed portion (63) is formed on a sliding surface (61) of the main lip (6) at a position apart a specified distance from a lip edge (62).

2. The sealing device (1) as claimed in claim 1,
wherein a plurality of axially extending projections (65) is formed on the sliding surface (61) of the main seal lip (6) at a position apart a specified distance from the lip edge (62), so as to form the roughed portion on the sliding surface.

3. The sealing device (1) as claimed in claim 1,
wherein a plurality of axially extending concave threads (67) is formed on the sliding surface (61) of the main seal lip (6) at a position apart a specified distance from the lip edge (62), so as to form the roughed portion on the sliding surface.

4. The sealing device (1) as claimed in claim 1,
wherein a plurality of axially extending lattice-shaped projections (68) is formed on the sliding surface (61) of the main seal lip (6) at a position apart a specified distance from the lip edge (62), so as to form the roughed portion on the sliding surface.
